# EUROPEAN PATENT APPLICATION

(11) **EP 1 701 271 A1**
(43) Date of publication of application: **13.09.2006**
(21) Application number: 05254737.9
(22) Date of filing: 28.07.2005
(51) Int. Cl.: G06F 13/40, G06F 11/10

(54) **Electronic apparatus system with master node and slave node**

(30) Priority: 07.03.2005 JP 2005062998
(71) Applicant: FUJITSU LIMITED, Kawasaki-shi, Kanagawa 211-8588 (JP)
(72) Inventor: Hatamori, Shuei c/o Fujitsu Limited, Kawasaki-shi Kanagawa 211-8588 (JP)
(74) Representative: Stebbing, Timothy Charles

(57) **Abstract**

An electronic apparatus system is disclosed that comprises at least one master node (MS7); and a plurality of slave nodes (SL1,SL2...SLn) connected to the at least one master node via an I²C interface, wherein each of the plurality of slave nodes is set to a slave address with an address distance of two bits or greater with respect to one another. Thus, wrong addressing due to single-bit errors is avoided.

## Description

The present invention relates generally to a method of setting addresses in an electronic apparatus system with master nodes and slave nodes. More particularly, the present invention relates to address setting of slave nodes in an electronic apparatus system connecting at least one master node with a plurality of slave nodes by use of a bus serial communication system.

As a system connecting many devices or circuit boards with a common bus, a configuration is known which connects at least one master node with a plurality of slave nodes by use of **serial bus** communication. For such a configuration, it is further proposed to utilize a serial communication system using the I²C (I Square C) bus developed by Philips Inc. (THE I2C-BUS SPECIFICATION VERSION 2.1 January 2000, published by Philips Semiconductors Inc.)

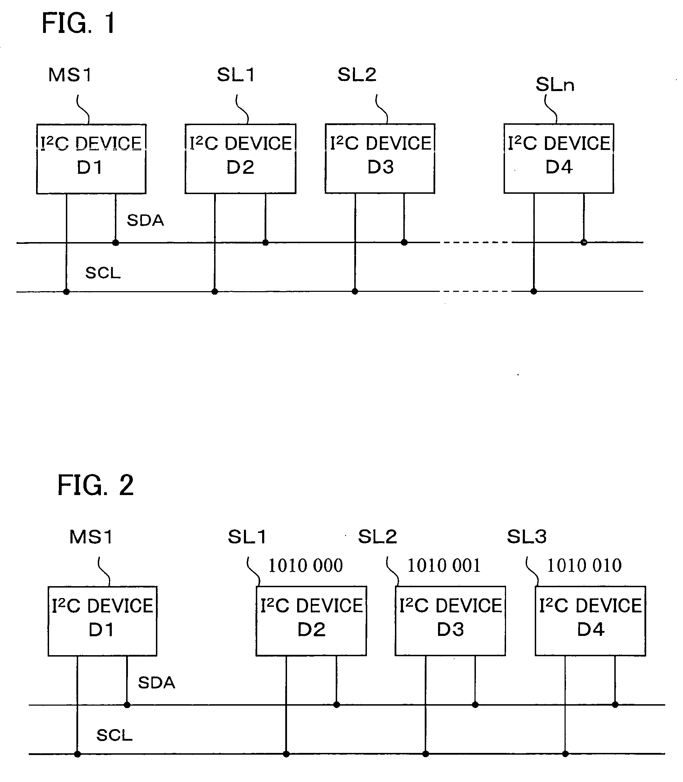

In other words, as shown in Fig. 1, in the serial communication system, devices SL1 to SLn or the plurality of slave nodes are serially connected **using two** signal lines, SDA (Serial DAta) and SCL (Serial CLock), to a device MS1 which **acts as the** master node.

In such a network using the I²C (I Square C) bus, the master node MS takes all the control of communications, and each slave node SL cannot send a communication request to the master node MS or communicate with other slave nodes. In order to transmit data from the master node MS device to each slave node SL device (hereinafter, simply referred to as the I²C device), an identification ID must be added to each device.

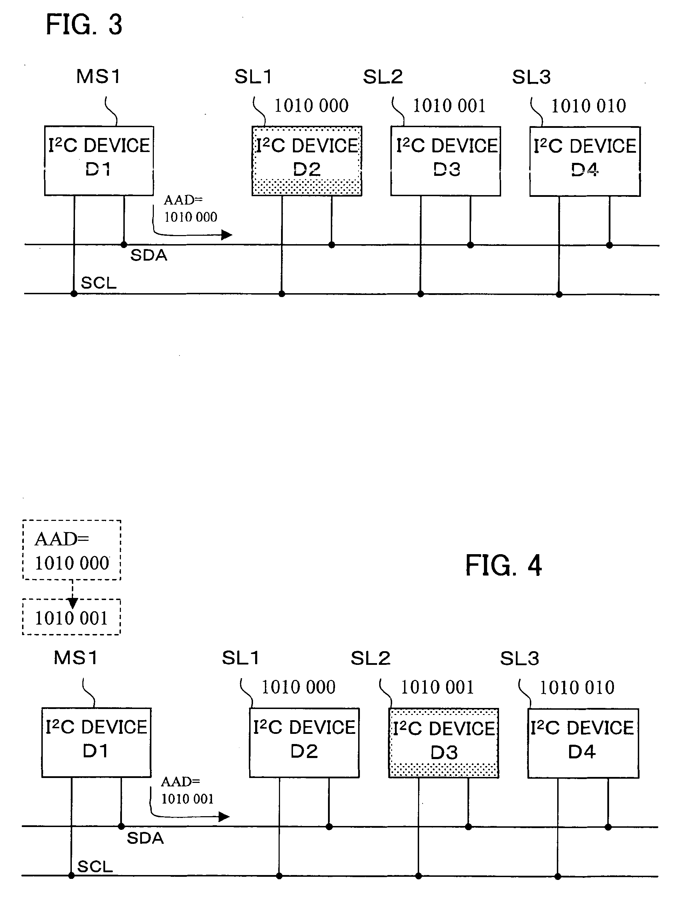

Fig. 2 shows an example of slave address allocation to the plurality of I²C devices. Each of the I²C devices SL1, SL2 and SL3 is **provided** an address **differing in one** bit, such as "1010 000", "1010 001" and "1010 010". Therefore, as shown in Fig. 3, if "1010 000" is sent from the master device MS1 as an access destination address, the address is identical to the address set to the I²C device SL1 and only this I²C device SL1 is enabled for transmission and reception.

For such a serial communication system using the I²C bus, a method for managing ID (address) of each node is proposed as prior art (Japanese Patent Application Laid-Open Publication No. 2001-134525). The invention described in Japanese Patent Application Laid-Open Publication No. 2001-134525 uses the I²C bus if a plurality of **optional devices** are serially connected. Also, by setting one-bit IDs to two-staged **optional devices** with the use of an inverter, the address setting is simplified.

As alternative technology, Japanese Patent Application Laid-Open Publication No. 2001-134525 shows avoiding an error of redundantly adding identical IDs to a plurality of nodes by managing the history of the ID setting from the master node in the slave nodes to enable to check whether IDs are correct or not.

As described above, in order for a master node MS device to access a slave node SL device, a slave address must be specified. However, due to bugs in firmware, **wiring defects** or the like, an unintended slave address may be issued by one-bit modification.

For example, as shown in Fig. 4, when the master node device MS1 actually should access a slave node with an address "1010 000", if the address is changed to an address "1010 001" and improperly transmitted, the master node device MS1 will access the different I²C device SL2 corresponding to the wrong address "1010 001", instead of the I²C device SL1, to and from which information is actually desired to be transmitted.

If the I²C device SL1 is responsible to control the system, operation of the system is not guaranteed. Forexample, if the device has switch functions such as activating power-on or power-off processing, system operation is significantly affected.

However, a solution for such a problem is neither indicated nor disclosed in the above prior arts, THE I2C-BUS SPECIFICATION VERSION 2.1 January 2000, published by Philips Semiconductors Inc., and Japanese Patent Application Laid-Open Publication No. 2001-175584 and 2001-134525.

It is therefore **desirable to** provide an electronic apparatus system with master nodes and slave nodes, using I²C slave address allocation for avoiding wrong setting of access destinations due to above wrong aduress generation.

**According to a first** aspect of the present invention there is provided an electronic apparatus system comprising at least one master node; and a plurality of slave nodes connected to the **or each** master node via an I²C interface, wherein each of the plurality of slave nodes is set to a slave address with an address distance of two bits or greater with respect to one another.

**According to a second aspect** of the present invention there is provided an electronic apparatus system comprising an I²C controller; a switch having a plurality of channel ports, the switch connected to the I²C controller via an 1²C interface; and a plurality of groups of slave nodes connected to each of the plurality of channel **ports,** wherein each of the plurality of slave nodes belonging to each group of the plurality of groups is set to a slave address with an address distance of two bits or greater with respect to one another.

The electronic apparatus system of the present invention may further comprise a processor operable to control the I²C controller. In this case, in accordance with a command from the processor, the I²C controller may transmit a frame including a slave node address of the switch and notification for which channel port is selected and connected, and then transmit a frame including a slave node address of one of a plurality of slave nodes belonging to a group of the selected and connected channel **ports,** to thereby enable access to a slave node with the slave node address.

**According to a third aspect** of the present invention there is provided an electronic apparatus system comprising an I²C controller; a first switch having a plurality of channel ports, the first switch connected to the I²C controller via an I²C interface; and a plurality of boards connected to each of the plurality of channel ports of the first switch, wherein each of the plurality of boards includes a second switch having a plurality of channel ports, and a plurality of groups of slave nodes connected to each of the plurality of channel ports of the second switch, and wherein each of the plurality of slave nodes belonging to each **group** of the plurality of groups is set to a slave address with an address distance of two bits or greater with respect to one another.

The present invention thus allows wrong addressing due to a one-bit error to be avoided, false operation of unintended devices to be avoided, and **reliability** of a communication system. to be improved.

The above and other features and advantages of the present invention will become more apparent from the following detailed description when taken in conjunction with the accompanying drawings, in which:
Fig. 1 is a diagram describing a serial communication system;
Fig. 2 is a diagram showing an example of slave address allocation to a plurality of I²C devices;
Fig. 3 is a diagram describing an access from a master node device to an I²C device SL1;
Fig. 4 is a diagram describing a situation when an error is generated for an address of a slave node to which a master node device actually should access;
Fig. 5 is a diagram describing a basic concept of the present invention;
Fig. 6 is a diagram describing the impossibility of transmission and reception by the slave node when the slave address is inverted by **a single bit;**
Fig. 7 is a first embodiment structure block diagram of an information processing system to which the present invention is applied;
Fig. 8 is a diagram describing an example of a signal frame disclosed in THE I2C-BUS SPECIFICATION VERSION 2.1 January 2000, published by Philips Semiconductors Inc.;
Fig. 9 is a second embodiment structure block diagram of an information processing system to which the present invention is applied; and
Fig. 10 is a diagram enlarging and showing the board 3C as an example of a board in the example of Fig. 9.

Embodiments of the present invention will now be described with reference to the accompanying drawings. The embodiment is intended for understanding of the present invention, and the technical scope of the present invention is not limited thereto.

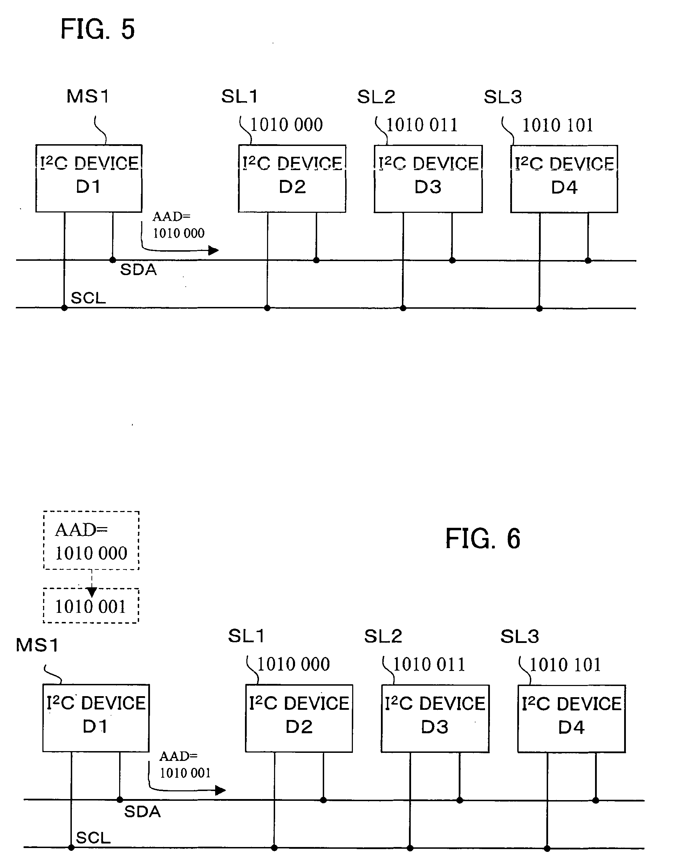

Fig. 5 is a diagram describing a basic concept of the present invention, which allocates slave node addresses such that each address is varied in at least two bits. In other words, as an example, address distances of at least two bits exist among address "1010 000" set to a slave node device SL1, address "1010 011" set to a slave node device SL2 and address "1010 101" set to a slave node device SL3, with respect to one another.

Because of such a feature that address distances of at least two bits **exist between devices,** as shown in **Fig.** 6, if a slave address is inverted by one bit, no slave device can perform transmission or reception. In this case, although actually intended control cannot be conducted, effects on the system due to access to other devices can be avoided. In this way, **reliability** of the interface for system control can be improved.

### Embodiment 1

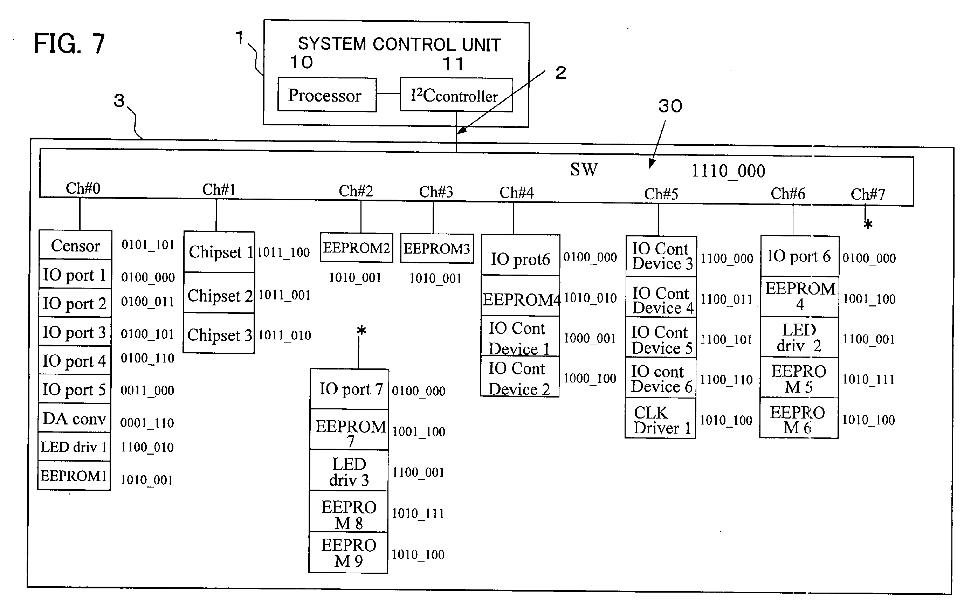

Fig. 7 is a first embodiment structure block diagram of an information processing system to which the present invention is applied.

The information processing system shown in Fig. 7 is an example of a server system and has a system control unit 1 controlling the entire system, and an IO board 3 connected to the system control unit 1 through an I²C interface 2 and corresponding to an input-output device unit of the server system.

The 10 board 3 is mounted with various I²C devices for controlling and monitoring, chip sets which can be controlled by I²C, and an IO controller device. On the other hand, the system control unit 1 is mounted with a processor 10 for monitoring and controlling the system, and an I²C controller 11 connected to the processor 10 for controlling the I²C devices.

The I²C controller 11 is connected to the I²C devices on the IO board 3 through the I²C interface and controls the I²C devices on the IO board 3 by the processor 10 of the system control unit 1 controlling the I²C controller 11.

On the IO board 3, the I²C device 30 with a switch function (hereinafter, simply referred to as a switch) enables one channel out of the plurality of controlled interfaces (channels CH #0 to #7 in Fig. 7).

At this point, other channels CH are not involved (operated) . Logically, the system control (I²C) interface is independent for each channel. Therefore, same addresses or addresses with only one-bit difference can be set to different channels.

One switch 30 or I²C device exists and is allocated with an I²C address (in the example of the figure, "1110 000"). Therefore, an access to the switch 30 conforms to the I²C protocol.

In Fig. 7, according to the present invention, addresses of the I²C devices controlled by any channel and the IO board 30 of the switch 30 are set such that all the addresses are varied in at least two bit positions. In this way, when accessing to any I²C device controlled by any channel CH, if the I²C address is different from the I²C address of the intended device in one bit, other devices are not accessed.

For example, although the system may be significantly affected if an unintended chipset is improperly manipulated, such a possibility of impact can be avoided by application of the present invention.

In this way, by using the address allocation method of the present invention, credibility can be improved for the system control interface using the I²C devices.

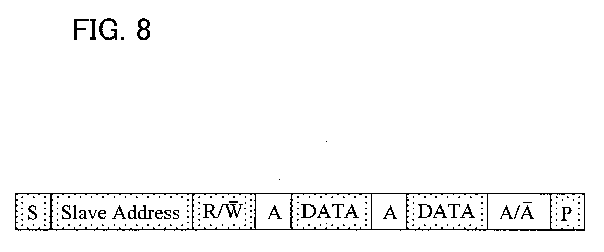

Fig. 8 is an example of a signal frame disclosed in THE I2C-BUS SPECIFICATION VERSION 2.1 January 2000, published by Philips Semiconductors Inc. Descriptions are made for an example of accessing to a slave node SL by use of such a frame. First, describing a configuration of the frame of Fig. 8, shaded regions of the frame are signal regions sent from a master node MS to the slave node SL, and other white regions are signal regions sent from the slave node SL to the master node MS. Further, in Fig. 8, symbols A, /A are an acknowledgement signal or a negative acknowledgement signal of the slave node SL to the master node MS. A symbol S is a start bit, and a symbol P is a stop bit.

Assuming an example when accessing to a chipset 3 belonging to a channel #1, the processor 10 controls the I²C control unit 11 such that the switch 30 is selected and switched to the channel #1.

In response to this control, the I²C control unit 11 sets an address "1110#000" of the switch 30 to a slave address region of the frame of Fig. 8, and sets and sends out a channel selection command of Ch#1 to subsequent data regions.

In this way, the switch 30 receives the frame and changes over the switch to select the slave nodes in a group belonging to followers of CH#1, corresponding to the channel selection command of CH#1.

Then, the I²C control unit 11 sets an address "1010 010" to the slave address region of the frame of Fig. 8. At this point, the address "1010 010" is allocated to only one slave node in the **group** belonging to the CH#1. Although the address is common with addresses of slave nodes belonging to other channels, collision will not happen since the channel CH#1 is selected by the switch 30.

Also, since an address **varying_in two or more bits** is set to each of the slave nodes belonging to the same channel Ch group, other slave nodes will not selected due to a one-bit error.

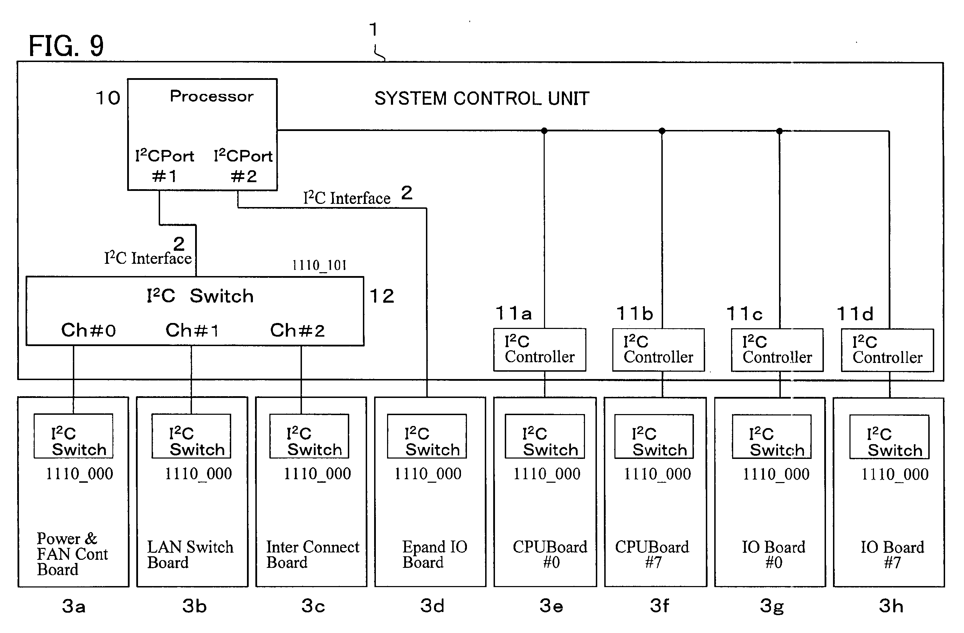

Fig. 9 is a second embodiment structure block diagram of an information processing system to which the present invention is applied. The above first embodiments are configured such that the system control unit 1 is connected to the single IO board 3. On the other hand, the second embodiment is configured such that the system control unit 1 is connected to a plurality of IO boards 3a to 3h.

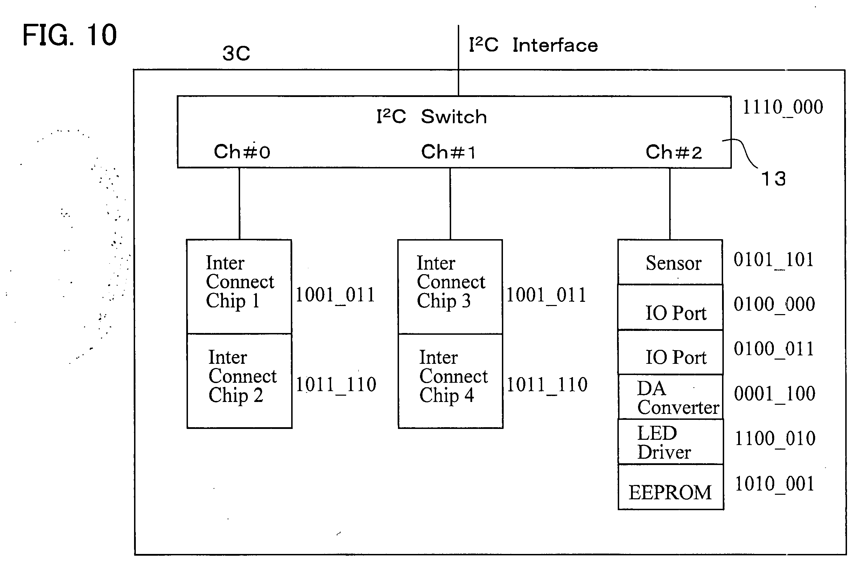

Fig. 10 is a diagram enlarging and showing details of one of the 10 boards 3a to 3h, for example, the 10 board 3c, in Fig. 9.

The processor 10 in the system control unit 1 has own I²C ports #1 and #2 and is a master node for controlled slave nodes connected via the I²C interface to the I²C ports #1 and #2.

The switch 12 selects and connects to one of channels Ch#0 to #2 due to a command from the processor 10. Out of boards 3a, 3b and 3c connected to the switch 12, only the selected and connected board can communicate with the processor which is the master node. A board 3d will be directly connected to the I²C port #2 of the processor 10 to be a slave node.

On the other hand, I²C controllers 11a to 11d are connected with the processor 10 in accordance with a specification different from the I²C interface. Also, each of boards 3e to 3h is connected to the I²C controllers 11a to 11d via the I²C controllers 11a to 11d. Therefore, the I²C controllers 11a to 11d are the master nodes of the boards 3e to 3h which **are** slave nodes, respectively.

In the example shown in Fig. 9, although the boards 3a to 3h have the I²C switches possessing the same address "1110 000", collision will not happen since each board is connected to a different channel or a different I²C controller.

Fig. 10 is a diagram enlarging and showing the board 3C as an example of a board. To the switch 13 with a slave address "1110 000", a plurality of slave nodes are connected under each group which is connected to the channel port ch#0, #1 or #2.

Among the groups connected to the channel port ch#0, #1 and #2, the same slave node address can be set to the slave nodes. However, among the slave nodes connected to the same channel port, addresses varied by two bits or greater are set, with respect to one another, according to the present invention. In this way, for one-bit address errors, the possibility can be avoided in terms of accessing to an unexpected slave node which is not intended for transmission and reception.

As described above in accordance with the drawings, by applying the present invention, for one-bit address errors, wrong slave nodes can be avoided to be accessed, and credibility of an electronic apparatus can be improved. Therefore, the present invention makes a huge contribution to industries.

While the illustrative and presently preferred embodiment of the present invention has been described in detail herein, it is to be understood that the inventive concepts may be otherwise variously embodied and employed and that the appended claims are intended to be construed to include such variations except insofar as limited by the prior art.

## Claims

1. An electronic apparatus system comprising:
at least one master node; and
a plurality of slave nodes connected to the at least one
master node via an I²C interface,
wherein each of the plurality of slave nodes is set to a slave address with an address distance of two bits or greater with respect to one another.

2. An electronic apparatus system comprising:
an I²C controller;
a switch having a plurality of channel ports, the switch connected to the I²C controller via an I²C interface; and
a plurality of groups of slave nodes connected to each of the plurality of channel **ports,**
wherein each of the plurality of slave nodes belonging to each **group** of the plurality of groups is set to a slave address with an address distance of two bits or greater with respect to one another.

3. The electronic apparatus system of claim 2, further comprising a processor operable to control the I²C controller,
wherein, in accordance with a command from the processor, the I²C controller transmits a frame including a slave node address of the switch and notification for which channel port is selected and connected, and
wherein the I²C controller then transmits a frame including a slave node address of one of a plurality of slave nodes belonging to a group of the selected and connected channel port, to enable access to a slave node with the slave node address.

4. An electronic apparatus system comprising:
an I²C controller;
a first switch having a plurality of channel ports, the first switch connected to the I²C controller via an I²C interface; and
a plurality of boards connected to each of the plurality of channel port of the first switch,
wherein each of the plurality of boards includes a second switch having a plurality of channel ports, and a plurality of groups of slave nodes connected to each of the plurality of channel ports of the second switch, and
wherein each of the plurality of slave nodes belonging to each group of the plurality of groups is set to a slave address with an address distance of two bits or greater with respect to one another.
